# EUROPÄISCHE PATENTSCHRIFT

(11) **EP 1 692 205 B1**
(45) Veröffentlichungstag und Bekanntmachung des Hinweises auf die Patenterteilung: **12.11.2008**
(21) Anmeldenummer: 04803248.6
(22) Anmeldetag: 24.11.2004
(51) Int. Cl.: C08G 64/00

(54) **VERFAHREN ZUR HERSTELLUNG VON POLYCARBONATEN MIT GERINGEM GEHALT AN FLÜCHTIGEN VERBINDUNGEN NACH DEM UMESTERUNGSVERFAHREN**
METHOD FOR PRODUCING POLYCARBONATES HAVING A LOW CONTENT OF VOLATILE COMPOUNDS ACCORDING TO THE TRANSESTERIFICATION PROCESS
PROCEDE DE PRODUCTION DE POLYCARBONATES A FAIBLE TENEUR EN COMPOSES VOLATILS, SELON LE PROCEDE DE TRANSESTERIFICATION

(30) Priorität: 06.12.2003 DE 10357161
(43) Veröffentlichungstag der Anmeldung: 23.08.2006
(73) Patentinhaber: Bayer MaterialScience AG, 51368 Leverkusen (DE)
(72) Erfinder: HUCKS, Uwe, 46519 Alpen (DE); MÖTHRATH, Melanie, 40223 Düsseldorf (DE); HEUER, Helmut-Werner, 47829 Krefeld (DE); KÖNIG, Thomas, 51375 Leverkusen (DE); SIMON, Lydia, 2930 Brasschaat (BE); BUTS, Marc, 2570 Duffel (BE); VANDEN EYNDE, Johan, 9052 Zwijnaarde (BE)
(86) Internationale Anmeldenummer: PCT/EP2004/013321
(87) Internationale Veröffentlichungsnummer: WO 2005/054335

(56) Entgegenhaltungen:
- EP-A- 1 253 163
- WO-A-01/60889
- WO-A-02/077067
- US-A- 5 821 322
- US-A1- 2002 193 554
- US-B1- 6 271 290

## Beschreibung

Die vorliegende Erfindung betrifft ein Verfahren zur Herstellung monomerarmer Polycarbonate nach dem Umesterungsverfahren. Das Verfahren ist dadurch gekennzeichnet, dass durch Inhibierung der Reaktion vor Eintritt der Reaktionsmischung in den Endreaktor einer Produktionsanlage die Restmonomergehalte unter Benutzung des Endreaktors, in dem üblicherweise die Polykondensation durchgeführt wird, reduziert werden, so dass Polycarbonate mit geringem Gehalt an flüchtigen Verbindungen erhalten werden.

Unter Restmonomeren werden im Sinne der vorliegenden Erfindung die echten Monomere, das sind Dihydroxyarylverbindungen und Diarylcarbonate, sowie flüchtige Komponenten aller Art wie z.B. niedermolekulare Reaktionsprodukte, Monohydroxyarylverbindungen, sowie Zersetzungs-und Spaltprodukte, die im Umesterungsprozess entstehen, sowie auch alle Nebenverbindungen, die über die oben genannten Rohstoffe eingetragen werden, verstanden. Unter niedermolekularen Reaktionsprodukten im Zusammenhang mit den Restmonomeren sind dabei Polykondensationsgrade bis 3 zu verstehen. Betrachtet man die Endgruppen an diesen Molekülen und zieht diese zusammen, dann ergibt sich formal eine Monohydroxyarylverbindung oder eine Dihydroxyarylverbindung oder ein Diarylcarbonat.

Die Herstellverfahren für Polycarbonat sind literaturbekannt und in vielen Anmeldungen beschrieben:
Das Polycarbonat wird nach dem Schmelzeumesterungsverfahren hergestellt. Die Herstellung von aromatischen Oligo- bzw. Polycarbonaten nach dem Schmelzumesterungsverfahren ist literaturbekannt und beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in der DE-C 1 031 512, US-B 3 022 272, US-B 5 340 905 und US-B 5 399 659 vorbeschrieben.

Polycarbonate, die nach dem Phasengrenzflächenverfahren hergestellt werden, haben in der Regel geringe Gehalte an Restmonomeren.

Das Umesterungsverfahren führt dagegen immer zu Produkten mit Restmonomergehalten an Monohydroxyarylverbindungen, Dihydroxyarylverbindungen und Diarylcarbonaten.

Diese Restmonomergehalte sind für ausgewählte Anwendungen, wie zum Beispiel im Lebensmittel- oder Medizinbereich, sowie bei der Herstellung von optischen Datenträgern störend und nicht erwünscht.

Bei der Herstellung nach dem Umesterungsverfahren müssen deshalb nach Erreichen des gewünschten Molekulargewichtes geeignete Maßnahmen durchgeführt werden, um den Restmonomergehalt zu reduzieren.

In der Regel werden bei der Herstellung von Polycarbonaten nach dem Umesterungsverfahren alkalisch wirkende Katalysatoren eingesetzt. Die Produktionsanlagenkonzeption macht unterschiedliche Katalysatoren oder Kombinationen verschiedener Katalysatoren in unterschiedlich hohen Mengen notwendig. In der Literatur werden überwiegend Kombinationen aus Oniumverbindungen, unter Oniumverbindungen sind im weiteren Verlauf Mitglieder der Gruppe der Ammonium- und Phosphoniumverbindungen zu verstehen, und alkalisch wirkenden Alkali- oder Erdalkaliverbindungen beschrieben (beispielhaft seien hier DE 4 312 390 A1, EP 719 816 B1, US 6 228 973 B1 genannt). Während sich viele der katalytisch wirkenden Oniumverbindungen im Verlauf der Reaktion mehr oder weniger zersetzen, liegen die alkalisch wirkenden Alkali- oder Erdalkaliverbindungen auch nach der Reaktion in ihrer wirksamen Form vor. Um nun restmonomerarme Polycarbonate zu erhalten, ist das Abstoppen der Reaktion bzw. das Neutralisieren der Katalysatoren, besonders der Alkali- oder Erdalkaliverbindungen, nach der Reaktion und vor dem anschließenden Abtrennen der Restmonomeren unabdingbar. Dabei greift man in der Regel auf deutlich überschüssige Äquivalente an Inhibitoren, bezogen auf die eingesetzten Katalysatoren, besonders bezogen auf die alkalischen bzw. erdalkalischen Katalysatoren, zurück.

So ist in WO-A 00 / 77 073 eine Schmelzeumesterung für Polycarbonat mit Oniumkatalysatoren in Kombination mit Alkali- oder Erdalkaliverbindungen beschrieben. Um restmonomerarme Polycarbonate zu erhalten, muss das Polymer nach der Reaktion mit einem deutlichen Überschuss (beispielweise 6 Äquivalente) an sauren Verbindungen, wie beispielsweise Sulfonsäureestern, zu den eingesetzten Alkali- bzw. Erdalkalikatalysator-Äquivalenten gequencht werden, um dann in einem zusätzlichen Verfahrensschritt in einem Extruder oder Reaktor von den Restmonomeren befreit zu werden. Dabei wird gleichzeitig ein Übergangsmetallfänger wie beispielweise ortho-Phosphorsäure in geringen Mengen zugesetzt.

EP-A 1 275 677 beschreibt ein alkalikatalysiertes Schmelzeumesterungsverfahren für Polycarbonat, in dem der alkalische Katalysator nach der Reaktion mit 2 Äquivalenten (bezogen auf Alkali-Katalysator-Äquivalente) Sulfonsäureester gequencht wird und dann in einem zusätzlichen Verfahrensschritt in einem Extruder die Restmonomeren entfernt werden.

Ziel ist jedoch, für die heutigen Anwendungen im elektronischen Bereich und bei den Speichermedien neben restmonomerarmen Polycarbonaten auch im wesentlichen elektrolytfreie oder zumindest elektrolytarme, d.h. im wesentlichen ionenfreie oder zumindest ionenarme Polycarbonate zu verwenden. Elektrolytarm im Sinne der Erfindung sind Polycarbonate, deren Alkali-und Erdalkaligehalt < 60 ppb, bevorzugt < 40 ppb und besonders bevorzugt < 20 ppb beträgt.

Alkalische oder erdalkalische Katalysatoren verbleiben aber, wie oben beschrieben, im Polycarbonat und wirken sich, da sie Verunreinigungen darstellen, negativ auf die Polymereigenschaften aus. Die Polycarbonate sind dann nicht zur Herstellung bestimmter Produkte geeignet. Außerdem müssen diese Polycarbonate in der Regel durch geeignete Additive stabilisiert werden, wodurch weitere Ionen eingetragen werden.

Zur Herstellung elektrolytarmer Polycarbonate ist daher die Verwendung bestimmter reiner Oniumkatalysatoren ohne die zusätzliche Verwendung alkalisch wirkender Alkali- bzw. Erdalkaliverbindungen besonders vorteilhaft. Die Verwendung von alkalisch wirkenden Alkali- bzw. Erdalkaliverbindungen, auch nicht in Kombination mit Oniumkatalysatoren, ist dagegen nicht geeignet, um elektrolytarme Polycarbonate zu erhalten.

Der besondere Vorteil ausgewählter Oniumkatalysatoren besteht darin, dass zum Ende des Herstellprozesses ihre Konzentration im Reaktionsgemisch wegen ihrer thermischen Instabilität erheblich abnimmt. Die Aufkondensation der Oligocarbonate gelingt unter Verwendung reinster Rohstoffe in ausgewählten Reaktoren, wie sie beispielweise in WO-A 02 / 077 067, EP A 1 253 163, JP 2 003 155 338, US 6 329 495, WO A 99 28 370, WO 02 044 244 und KR 0 104 915 beschrieben sind. Die so hergestellten Polycarbonate enthalten jedoch, wie bei anderen Verfahren auch, Restmonomere im Gleichgewicht mit dem Polymer.

Es stellte sich daher, ausgehend vom Stand der Technik, die Aufgabe, ein wirtschaftliches Verfahren zu finden, welches restmonomerarme und gleichzeitig elektrolytfreie oder zumindest elektrolytarme Polycarbonate mit möglichst geringem technischen Aufwand liefert.

Überraschend wurde nun gefunden, dass monomerarme und gleichzeitig elektrolytfreie oder zumindest elektrolytarme Polycarbonate in ausgezeichneten Qualitäten nach dem Umesterungsverfahren ohne zusätzlichen technischen Aufwand in einer bestehenden mehrstufigen Produktionsanlage, dadurch hergestellt werden können, dass in einem mehrstufigen Prozess, der ohne Alkali-oder Erdalkalikatalyse durchgeführt wird, das Endmolekulargewicht früher, d.h. bereits im vorletzten Reaktor, eingestellt wird und nach Abstoppen bzw. Inhibieren der Reaktion mit äußerst geringen Mengen an sauren Verbindungen mit einem pka < 5 die vorhandenen Restmonomere in der Endphase des Prozesses, das heißt in letzten Reaktor, dem sogenannten Finishreaktor, abgedampft werden können. Die erforderlichen Mengen an Inhibitoren sind unterstöchiometrisch bezogen auf die ursprünglich eingesetzten Katalysatormengen, sowie auch unterstöchiometrisch bezogen auf gefundene Restmengen Phosphor.

Das hohe Produktqualitäten erhalten werden ist umso erstaunlicher, weil die Verweilzeiten in End-oder Finishreaktoren im Bereich von 15 min bis zu mehreren Stunden liegen können, die in den üblicherweise benutzten Vorrichtungen zur Entfernung von Restmonomeren bzw. flüchtigen Verunreinigungen wie Extruder, Strangverdampfer, Dünnschichtverdampfer (Filmtruder) u.ä. aber nur im Bereich weniger Minuten liegen. Der Fachmann hätte erwartet, dass sich bei den hohen Verweilzeiten und den hohen Temperaturen das chemische Gleichgewicht immer wieder neu einstellt und das Molekulargewicht steigt.

Gleichzeitig war zu erwarten, dass die Qualität, die Verfärbung und der Gehalt unerwünschter Nebenverbindungen, merklich schlechter wird. Unerwünschte Nebenverbindungen sind beispielsweise Verzweiger, sowie auch Zersetzungs- und Spaltprodukte des Umesterungsprozesses, die zu dieser Qualitätsminderung führen können.

Die nach dem Stand der Technik erforderlichen kurzen Verweilzeiten können in den Endreaktoren, wie sie für Polykondensationen verwendet werden, jedoch aus verfahrenstechnischen Gründen nicht eingestellt werden. Es war also keineswegs naheliegend, aus einer Produktionsanlage ohne eine spezielle Vorrichtung zur Entfernung von Restmonomeren bzw. flüchtigen Verunreinigungen monomerarme Polycarbonate in hervorragender Qualität zu gewinnen.

Bevorzugt werden als Endreaktoren die in WO-A 02/077 067, EP A 1 253 163, JP 2 003 155 338, US 6 329 495, WO A 99/28 370, WO 02 044 244 und KR 0 104 915 beschriebenen Reaktoren eingesetzt. Besonders bevorzugt werden die in WO-A 02/077 067, EP A 1 253 163, JP 2 003 155 338, US 6 329 495, WO A 99/28 370 und WO 02 044 244 beschriebenen Reaktoren eingesetzt und ganz besonders bevorzugt, die in WO-A 02/077067 und EP A 1 253 163 beschriebenen Reaktoren, die auch als Korbreaktoren bezeichnet werden, eingesetzt.

Die Mengen an einzusetzenden Inhibitoren sind bei einem Verfahren, im dem ausschließlich Oniumkatalyse eingesetzt wird, erstaunlicherweise besonders gering. Das ist für die Produktqualität von besonderem Vorteil, weil die Reste störender Verbindungen aus der Katalyse und der Inhibierung auf ein-Minimum reduziert sind. Dass nur äußerst geringe Mengen an Inhibitoren zum Quenchen der Reaktion genügen, war nicht naheliegend und nach dem Stand der Technik auch nicht zu erwarten.

Wie im Stand der Technik erwähnt, müssen bei der Verwendung von Alkali- bzw. Erdalkalikatalysatoren mindestens stöchiometrische Mengen an Quenchem eingesetzt werden um alle katalytisch aktiven Spezies sicher zu deaktivieren. Im erfindungsgemäßen Verfahren genügen dagegen überraschenderweise bereits unterstöchiometrische Mengen an Quenchern bezogen auf die ursprünglich eingesetzten Katalysatormengen, sowie auch unterstöchiometrisch bezogen auf gefundene Restmengen Phosphor, die als Katalysator betrachtet werden.

Kurz gesagt, ein Ergebnis, wie das vorliegende, ist in keiner Weise naheliegend, sondern im Gegenteil höchst überraschend.

Der Durchsatz einer Produktionsanlage bei der kontinuierlichen Schmelzeumesterung ist u.a. abhängig vom Temperatur- und Verweilzeitprofil längs der Verfahrensstufen. Eine Restmonomerreduzierung ohne zusätzliche Einrichtungen geht zu Lasten des Durchsatzes, weil letztendlich Reaktorkapazität verloren geht. Das lässt sich über Temperatur- und Druckprofiländerungen in der Verfahrensführung etwas kompensieren, führt aber bei zu großen Verschiebungen leicht zu Qualitätseinbußen. Die Durchsatzeinbußen sind jedoch von einer solchen Größenordnung, dass weiterhin eine wirtschaftliche Herstellung des Polycarbonats gegeben ist.

Eine weitere Möglichkeit wäre, mit erhöhten Katalysatormengen zu arbeiten, was verbesserte Durchsätze ergäbe, aber dann zu Produkten mit erhöhten Elektrolytgehalten, also schlechten Eigenschaften, führt.

Für die Endformulierung (Einmischen von Additiven) des erzeugten Polycarbonats können die gleichen Anlagen, die für das Einmischen von Additiven verwendet werden wie z.B. Extruder oder statische Mischer und die in der Regel direkt hinter den Endreaktoren installiert sind, benutzt werden, ohne dass ein zusätzlicher Verfahrensschritt, hier die Monomerreduzierung, eingeschoben werden muss.

Ein weiterer Vorteil ist, dass in den Anlagen verschiedene Polycarbonatqualitäten mit unterschiedlichen Anforderungen ohne apparative Veränderungen hergestellt werden können.

Zur Durchführung des Verfahrens kann beispielsweise eine Anlagenkonzeption, wie sie in WO 02/077 067 dargestellt ist, benutzt werden.

Für die Herstellung von Polycarbonaten sind geeignete Dihydroxyarylverbindungen solche der Formel

HO-Z-OH

in denen Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kernalkylierte und kernhalogenierte Verbindungen.

Diese und weitere geeignete andere Dihydroxyarylverbindungen sind z.B. in den US-Patentschriften 2 970 131, 2 991 273, 2 999 835, 2 999 846, 3 028 365, 3 062 781, 3 148 172, 3 271 367, 3 275 601, 4 982 014, in den deutschen Patentschriften 1 570 703, 2 063 050, 2 036 052, 2211 956, 3 832 396, der französischen Patentschrift 1 561 518, und in der Monographie "H. Schnell, Chemistry and Physics of Polycarbonates, Interscience Publishers, New York 1964", S. 28ff; S.102ff", und in "D.G. Legrand, J.T. Bendler, Handbook of Polycarbonate Science and Technology, Marcel Dekker New York 2000, S. 72ff." beschrieben.

Bevorzugte Dihydroxyarylverbindungen sind beispielsweise: Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-4-methyl-cyclohexan, 1,1-Bis-(4-hydroxyphenyl)-3,3,5-trimethyl-cyclohexan, 1,3-Bis-[2-(4-hydroxyphenyl)-2-propyl]-benzol, 1,1'-Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1*H*-inden]-5,5'-diol.

Besonders bevorzugte Dihydroxyarylverbindungen sind: Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'- Bis-(4-hydroxyphenyl)-3-diisopropyl-benzol und 1,1'- Bis-(4-hydroxyphenyl)-4-diisopropyl-benzol.

Ganz besonders bevorzugt sind: 4,4'-Dihydroxydiphenyl, 2,2-Bis-(4-hydroxyphenyl)-propan und Bis-(4-hydroxyphenyl)-3,3,5-trimethyl-cyclohexan.

Es können sowohl eine Dihydroxyarylverbindung unter Bildung von Homopolycarbonaten als auch mehrere Dihydroxyarylverbindungen unter Bildung von Copolycarbonaten verwendet werden.

Anstelle der monomeren Dihydroxyarylverbindungen können auch niedermolekulare, überwiegend OH-endgruppengestoppte Oligocarbonate als Ausgangsverbindung eingesetzt werden.

Die Dihydroxyarylverbindungen können auch mit Restgehalten der Monohydroxyarylverbindungen, aus denen sie hergestellt wurden bzw. die niedermolekularen Oligocarbonate mit Restgehalten der Monohydroxyarylverbindungen, die bei der Herstellung der Oligomeren abgespalten wurden, eingesetzt werden. Die Gehalte können bis zu 20 %, vorzugsweise 10 %, besonders bevorzugt bis 5 % und ganz besonders bevorzugt bis zu 2 % betragen (s. z.B. EP-A 1 240 232).

Die verwendeten Dihydroxyarylverbindungen, wie auch alle anderen der Synthese zugesetzten Rohstoffe, Chemikalien und Hilfsstoffe können mit den aus ihrer eigenen Synthese, Handhabung und Lagerung stammenden Verunreinigungen kontaminiert sein, obwohl es wünschenswert und Ziel ist, mit möglichst sauberen Rohstoffen, Chemikalien und Hilfsstoffen zu arbeiten.

Die für die Umsetzung mit den Dihydroxyarylverbindungen geeigneten Diarylcarbonate sind solche der Formel 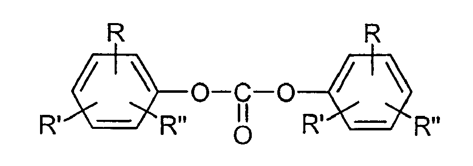 wobei R, R' und R" unabhängig voneinander H, gegebenenfalls verzweigtes C₁-C₃₄-Alkyl/Cycloalkyl, C₇-C₃₄-Alkylaryl oder C₆-C₃₄-Aryl darstellen und beide Seiten verschieden sein können. R kann auch -COO-R''' bedeuten, wobei R"' H, gegebenenfalls verzweigtes C₁-C₃₄-Alkyl/Cycloalkyl, C₇-C₃₄-Alkylaryl oder C₆-C₃₄-Aryl sein kann.

Solche Diarylcarbonate sind beispielsweise: Diphenylcarbonat, Methylphenyl-phenyl-carbonate und Di-(methylphenyl)-carbonate, auch als Gemisch, wobei die Stellung der Methylgruppe an den Phenylringen beliebig sein kann sowie Dimethylphenyl-phenyl-carbonate und Di-(dimethylphenyl)-carbonate, auch als Gemisch, wobei die Stellung der Methylgruppen an den Phenylringen beliebig sein können, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat,4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Bevorzugte Diarylverbindungen sind: Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat und Di-[4-(1-methyl-1-phenylethyl)-phenyl]-carbonat.

Besonders bevorzugt ist: Diphenylcarbonat.

Die Diarylcarbonate können auch mit Restgehalten der Monohydroxyarylverbindungen, aus denen sie hergestellt wurden, eingesetzt werden. Die Gehalte können bis zu 20 %, vorzugsweise 10 %, besonders bevorzugt bis 5 % und ganz besonders bevorzugt bis zu 2 % betragen.

Bezogen auf die Dihydroxyarylverbindung werden die Diarylcarbonate mit 1,02 bis 1,30 Mol, bevorzugt mit 1,04 bis 1,25 Mol, besonders bevorzugt mit 1,06 bis 1,22 Mol, ganz besonders bevorzugt mit 1,06 bis 1,20 Mol pro Mol Dihydroxyarylverbindung eingesetzt. Es können auch Mischungen der oben genannten Diarylcarbonate eingesetzt werden.

Zur Beeinflussung bzw. Veränderung der Endgruppen kann zusätzlich eine Monohydroxyarylverbindung eingesetzt werden, die nicht zur Herstellung des verwendeten Diarylcarbonats benutzt wurde. Sie wird durch folgende allgemeine Formel dargestellt: 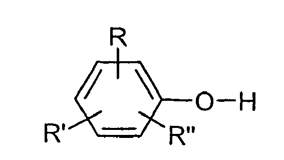 wobei R, R' und R" bei den Diarylcarbonaten definiert sind aber in diesem speziellen Fall R nicht H sein kann, wohl aber R' und R" H sein können.

Solche Monohydroxyarylverbindungen sind beispielsweise: 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind: 4-tert-Butylphenol, 4-iso-Octylphenol und 3-Pentadecylphenol.

Dabei ist eine Monohydroxyarylverbindung zu wählen, deren Siedepunkt über dem der Monohydroxyarylverbindung liegt, die zur Herstellung des verwendeten Diarylcarbonates eingesetzt wurde. (Im folgenden Text wird die Monohydroxyarylverbindung, die zur Herstellung eines Diarylcarbonats eingesetzt wurde, als Basis-Monohydroxyarylverbindung bezeichnet). Die Monohydroxyarylverbindung kann zu jedem Zeitpunkt im Reaktionsverlauf zugegeben werden. Sie wird bevorzugt zu Beginn der Reaktion zugegeben oder aber auch an beliebiger Stelle im Verfahrensverlauf. Der Anteil an freier Monohydroxyarylverbindung kann 0,2 - 20 Mol %, bevorzugt 0,4 - 10 Mol %, bezogen auf die Dihydroxyarylverbindung, betragen.

Die Endgruppen können auch durch Mitverwendung eines Diarylcarbonates, dessen Basis-Monohydroxyarylverbindung einen höheren Siedepunkt hat als die Basis- Monohydroxyarylverbindung des hauptsächlich eingesetzten Diarylcarbonates, verändert werden. Auch hier kann das Diarylcarbonat zu jedem Zeitpunkt im Reaktionsverlauf zugegeben werden. Es wird bevorzugt zu Beginn der Reaktion zugegeben oder aber auch an beliebiger Stelle im Verfahrensverlauf. Der Anteil des Diarylcarbonates mit der höher siedenden Basis-Monohydroxyarylverbindung an der gesamt eingesetzten Diarylcarbonatmenge kann 1 - 40 Mol %, bevorzugt 1 - 20 Mol % und besonders bevorzugt 1 - 10 Mol % betragen.

Als Katalysatoren werden im Schmelzumesterungsverfahren zur Herstellung von Polycarbonaten die in der Literatur bekannten basischen Katalysatoren wie beispielsweise Alkali- und Erdalkalihydroxyde und -oxyde, aber auch Ammonium- oder Phosphoniumsalze, im folgenden als Oniumsalze bezeichnet, eingesetzt. Bevorzugt werden bei der Synthese Oniumsalze, besonders bevorzugt Phosphoniumsalze eingesetzt. Phosphoniumsalze im Sinne der Erfindung sind solche der allgemeinen Formel: 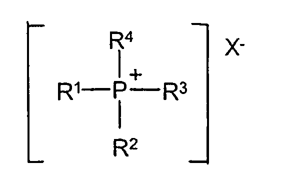 wobei R¹⁻⁴ dieselben oder verschiedene C₁-C₁₀-Alkyle, C₆-C₁₄-Aryle, C₇-C₁₅-Arylalkyle oder C₅-C₆-Cycloalkyle, bevorzugt Methyl oder C₆-C₁₄-Aryle, besonders bevorzugt Methyl oder Phenyl sein können, und X⁻ ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei R ein C₆-C₁₄-Aryl, C₇-C₁₅-Arylalkyl oder C₅-C₆-Cycloalkyl, bevorzugt Phenyl sein kann.

Bevorzugte Katalysatoren sind Tetraphenylphosphoniumchlorid, Tetraphenylphosphoniumhydroxid und Tetraphenylphosphoniumphenolat, besonders bevorzugt ist Tetraphenylphosphoniumphenolat.

Sie werden bevorzugt in Mengen von 10⁻⁸ bis 10⁻³ mol, bezogen auf ein mol Dihydroxyarylverbindung, besonders bevorzugt in Mengen von 10⁻⁷ bis 10⁻⁴ mol, eingesetzt.

Weiter besteht die Möglichkeit, ergänzende Mengen eines Oniumkatalysators des gleichen oder eines anderen Typs an Oniumkatalysator vor der Polykondensation zuzugeben.

Die Zugabe der Katalysatoren erfolgt in Lösung, um bei der Dosierung schädliche Überkonzentrationen zu vermeiden. Die Lösungsmittel sind system- und verfahrensinhärente Verbindungen, welche bereits Teil des Reaktionsgemisches sind und/oder während des Polykondensationsverfahrens gebildet werden, wie beispielsweise Dihydroxyarylverbindungen, Diarylcarbonate oder Monohydroxyarylverbindungen. Besonders bevorzugt sind Monohydroxyarylverbindungen, weil dem Fachmann geläufig ist, dass sich die Dihydroxyarylverbindungen und Diarylcarbonate bei schon leicht erhöhten Temperaturen, insbesondere unter Katalysatoreinwirkung, leicht verändern und zersetzen. Hierunter leiden die Polycarbonatqualitäten. Beim technisch bedeutsamen Umesterungsverfahren zur Herstellung von Polycarbonat ist die bevorzugte Verbindung Phenol. Phenol bietet sich auch deshalb schon zwingend an, weil der vorzugsweise benutzte Katalysator Tetraphenylphosphoniumphenolat bei der Herstellung als Mischkristall mit Phenol isoliert wird.

Die thermoplastischen Polycarbonate sind durch die Formel 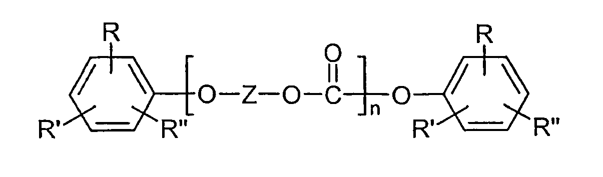 beschrieben und sind ebenfalls Bestandteil der vorliegenden Erfindung.

Die Klammer bezeichnet eine sich n-mal wiederholende Struktureinheit.

Z ist bereits oben bei den Dihydroxyarylverbindungen definiert. 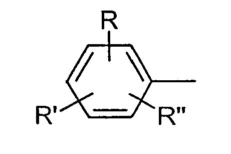 ist bereits oben bei den Diarylcarbonaten definiert, kann in diesem Fall als ganze Gruppe auch H und auf beiden Seiten verschieden sein.

Die Polycarbonate haben einen äußerst geringen Gehalt von Kationen und Anionen von jeweils weniger als 60 ppb, bevorzugt < 40 ppb und besonders bevorzugt < 20 ppb (als Na-Kation berechnet), wobei als Kationen solche von Alkali- und Erdalkalimetallen vorliegen, welche beispielsweise als Verunreinigung aus den verwendeten Rohstoffen und den Phosphonium- und Ammoniumsalzen stammen können. Weitere Ionen wie Fe-, Ni-, Cr-, Zn-, Sn, Mo-, Al-Ionen und ihre Homologen können in den Rohstoffen enthalten sein oder durch Abtrag oder Korrosion aus den Werkstoffen der benutzten Anlage stammen. Der Gehalt dieser Ionen ist in der Summe kleiner als 2 ppm, bevorzugt kleiner als 1 ppm und besonders bevorzugt kleiner 0,5 ppm.

Als Anionen liegen solche von anorganischen Säuren und von organischen Säuren (z.B. Chlorid, Sulfat, Carbonat, Phosphat, Phosphit, Oxalat, u.a.) in äquivalenten Mengen hinsichtlich der oben erwähnten Kationen vor.

Angestrebt werden also geringste Mengen, die nur durch Verwendung reinster Rohstoffe erreicht werden können. Derart reine Rohstoffe sind z.B. nur nach Reinigungsverfahren wie Umkristallisieren, Destillieren, Umfällen mit Wäschen u. ä. erhältlich.

Die Polycarbonate können gezielt verzweigt werden. Geeignete Verzweiger sind die für die Polycarbonatherstellung bekannten Verbindungen mit drei und mehr funktionellen Gruppen, vorzugsweise solche mit drei oder mehr Hydroxylgruppen.

Einige der verwendbaren Verbindungen mit drei oder mehr phenolischen Hydroxylgruppen sind beispielsweise: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Einige der sonstigen trifunktionellen Verbindungen sind: 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind: 3,3-Bis-(3-methyl-4-hydroxyphenyl)-2-oxo-2,3-dihydroindol und 1,1,1 -Tri-(4-hydroxyphenyl)-ethan.

Die Verzweiger werden in Mengen von 0,02 bis 3,6 Mol %, bezogen auf die Dihydroxyarylverbindung, eingesetzt.

Das Verfahren zur Herstellung von Polycarbonat nach dem Umesterungsverfahren kann diskontinuierlich oder auch kontinuierlich gestaltet werden. Nachdem die Dihydroxyarylverbindungen und Diarylcarbonate, ggf. mit weiteren Verbindungen, als Schmelze vorliegen, wird in Gegenwart geeigneter Katalysatoren die Umsetzung gestartet. Der Umsatz bzw. das Molekulargewicht wird bei steigenden Temperaturen und fallenden Drucken in geeigneten Apparaten und Vorrichtungen durch Abführen der sich abspaltenden Monohydroxyarylverbindung solange erhöht, bis der angestrebte Endzustand erreicht ist. Durch Wahl des Verhältnisses Dihydroxyarylverbindung zu Diarylcarbonat, der durch Wahl der Verfahrensweise bzw. Anlage zur Herstellung des Polycarbonats gegebenen Verlustrate des Diarylcarbonats über die Brüden und ggf. zugesetzter Verbindungen, wie beispielsweise einer höhersiedenden Monohydroxyarylverbindung, werden die Endgruppen in in Art und Konzentration geprägt.

Bezüglich der Art und Weise, in welcher Anlage und nach welcher Verfahrensweise der Prozess ausgeführt wird, gibt es keine Limitierung und Einschränkung.

Weiter gibt es keine spezielle Limitierung und Einschränkung bezüglich der Temperaturen, der Drucke und verwendeter Katalysatoren, um die Schmelzeumesterungsreaktion zwischen der Dihydroxyarylverbindung und dem Diarylcarbonat, ggf. auch anderer zugesetzter Reaktanten durchzuführen. Jede Bedingung ist möglich, solange die gewählten Temperaturen, Drucke und Katalysatoren eine Schmelzeumesterung unter entsprechend schneller Entfernung der abgespaltenen Monohydroxyarylverbindung ermöglichen.

Die Temperaturen über den gesamten Prozess liegen zwischen 180 und 330°C, die Drucke zwischen 15 bar, absolut und 0,01 mbar, absolut.

Meist wird eine kontinuierliche Verfahrensweise gewählt, weil das vorteilhaft für die Produktqualität ist.

Vorzugsweise ist das kontinuierliche Verfahren zur Herstellung von Polycarbonaten dadurch gekennzeichnet, dass eine oder mehrere Dihydroxyarylverbindungen mit dem Diarylcarbonat, ggf. auch anderer zugesetzter Reaktanten unter Verwendung von Katalysatoren, nach einer Vorkondensation ohne Abtrennen der gebildeten Monohydroxyarylverbindung in sich dann daran anschließenden mehreren Reaktions-Verdampfer-Stufen bei schrittweise steigenden Temperaturen und schrittweise fallenden Drucken umgesetzt werden, bis das Molekulargewicht bis zum gewünschten Niveau aufgebaut ist.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Schmelzviskositäten gerecht werden.

Alle Vorrichtungen sind über Pumpen, Rohrleitungen und Ventilen miteinander verbunden. Die Rohrleitungen zwischen allen Einrichtungen sollten selbstverständlich so kurz wie möglich sein und die Krümmungen der Leitungen so gering wie möglich gehalten werden, um unnötig verlängerte Verweilzeiten zu vermeiden. Dabei sind die äußeren, das heißt technischen Rahmenbedingungen und Belange für Montagen chemischer Anlagen zu berücksichtigen.

Zur Durchführung des Verfahrens nach einer bevorzugten kontinuierlichen Verfahrensweise können die Reaktionspartner entweder gemeinsam aufgeschmolzen oder aber die feste Dihydroxyarylverbindung in der Diarylcarbonatschmelze oder das feste Diarylcarbonat in der Schmelze der Dihydroxyarylverbindung gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze der Dihydroxyarylverbindung, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbußen länger verweilen.

Im nächsten Schritt wird der Katalysator, vorzugsweise gelöst in Phenol , zugemischt und die Schmelze auf die Reaktionstemperatur erhitzt. Diese beträgt zu Beginn des technisch bedeutsamen Prozesses zur Herstellung von Polycarbonat aus 2,2-Bis-(4-hydroxyphenyl)-propan und Diphenylcarbonat 180 bis 220°C, vorzugsweise 190 bis 210°C, ganz besonders bevorzugt 190°C.

Bei Verweilzeiten von 15 bis 90 min, vorzugsweise 30 bis 60 min, wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 15 bar absolut.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintritts-temperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage ggf. mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird die entstandene Hydroxyarylverbindung mit noch vorhandenen Monomeren verdampft. Nach einer Verweilzeit von 5 bis 30 min in einer Sumpfvorlage, ggf. mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird die entstandene Hydroxyarylverbindung mit noch vorhandenen Monomeren verdampft. Nach einer Verweilzeit von 5 bis 20 min in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird die entstandene Hydroxyarylverbindung mit noch vorhandenen Monomeren verdampft.

Die Zahl dieser Stufen, hier beispielhaft 4, kann zwischen 2 und 6 variieren. Die Temperaturen und Drucke sind bei Änderung der Stufigkeit entsprechend anzupassen, um vergleichbare Resultate zu erhalten. Die in diesen Stufen erreichte rel. Viskosität des oligomeren Carbonats liegt zwischen 1,04 und 1,20, bevorzugt zwischen 1,05 und 1,15, besonders bevorzugt zwischen 1,06 bis 1,10.

Das so erzeugte Oligocarbonat wird nach einer Verweilzeit von 5 bis 20 min in einer Sumpfvorlage ggf. mit Umpumpung bei gleichem Druck und gleicher Temperatur wie in der letzten Flash-/Verdampferstufe in einen Scheiben- oder Korbreaktor gefördert und bei 250 bis 310°C, bevorzugt 250 bis 290°C, besonders bevorzugt 250 bis 280°C, bei Drucken von 1 bis 15 mbar, vorzugsweise 2 bis 10 mbar, bei Verweilzeiten von 30 bis 90 min, vorzugsweise 30 bis 60 min, weiter aufkondensiert. Das Produkt erreicht eine rel. Viskosität von 1,12 bis 1,28, bevorzugt 1,13 bis 1,26, besonders bevorzugt 1,13 bis 1,24.

Die diesen Reaktor verlassende Schmelze wird in einem weiteren Scheiben- oder Korbreaktor auf die gewünschte Endviskosität bzw. das Endmolekulargewicht gebracht. Die Temperaturen betragen 270 bis 330°C, bevorzugt 280 bis 320°C, besonders bevorzugt 280 bis 310°C, der Druck 0,01 bis 3 mbar, vorzugsweise 0,2 bis 2 mbar, bei Verweilzeiten von 60 bis 180 min, vorzugsweise 75 bis 150 min. Die rel. Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Funktion der beiden Korbreaktoren kann auch in einem Korbreaktor zusammengefasst werden. Dies ist in einer bevorzugten Ausführungsform der vorliegenden Erfindung der Fall.

Die Brüden aus allen Verfahrensstufen werden unmittelbar abgeleitet, gesammelt und aufgearbeitet. Diese Aufarbeitung erfolgt in der Regel destillativ, um hohe Reinheiten der rückgewonnenen Stoffe zu erreichen. Dies kann beispielsweise gemäss Deutscher Patentanmeldung Nr. 10 100 404 erfolgen. Eine Rückgewinnung und Isolierung der abgespaltenen Monohydroxyarylverbindung in reinster Form ist aus ökonomischer und ökologischer Sicht selbstverständlich. Die Monohydroxyarylverbindung kann direkt zur Herstellung einer Dihydroxyarylverbindung oder eines Diarylcarbonats verwendet werden.

Die Scheiben- oder Korbreaktoren zeichnen sich dadurch aus, dass sie bei hohen Verweilzeiten eine sehr große, sich ständig erneuernde Oberfläche am Vakuum bereitstellen. Die Scheiben- oder Korbreaktoren sind entsprechend den Schmelzviskositäten der Produkte geometrisch ausgebildet. Geeignet sind beispielsweise Reaktoren, wie sie in der DE 44 47 422 C2 und EP A 1 253 163, oder Zweiwellenreaktoren, wie sie in der WO A 99/28 370 beschrieben sind.

Die Oligocarbonate, auch sehr niedermolekulare, und die fertigen Polycarbonate werden in der Regel mittels Zahnradpumpen, Schnecken unterschiedlichster Bauart oder Verdrängerpumpen spezieller Bauart gefördert.

Besonders geeignete Werkstoffe zur Herstellung der Apparate, Reaktoren, Rohrleitungen, Pumpen und Armaturen sind nicht rostende Stähle vom Typ Cr Ni (Mo) 18/10 wie z.B. 1.4571 oder 1.4541 (Stahlschlüssel 2001, Verlag: Stahlschlüssel Wegst GmbH, Th-Heuss-Straße 36, D-71672 Marbach) und Ni-Basislegierungen vom Typ C, wie z.B. 2.4605 oder 2.4610 (Stahlschlüssel 2001, Verlag: Stahlschlüssel Wegst GmbH, Th-Heuss-Straße 36, D-71672 Marbach). Die nicht rostenden Stähle werden bis zu Prozesstemperaturen von etwa 290°C und die Ni-Basislegierungen bei Prozesstemperaturen oberhalb von etwa 290°C benutzt.

Die wesentlichen Verfahrensparameter wie Verhältnis Diarylcarbonat zu Dihydroxyarylverbindung zu Beginn des Prozesses, Druck, Temperatur und Verweilzeit sind in der Gesamtanlage vor dem End- bzw. Finishreaktor so zu wählen, das vor Eintritt der Reaktionsschmelze in den End- bzw. Finishreaktor ein für die vorgesehene Anwendung des herzustellenden Produkts ausreichendes Molekulargewicht und geringe OH-Endgruppengehalte erreicht werden.

Das Endmolekulargewicht ist im wesentlichen von der gewählten Austrittstemperatur des Reaktors, dem Druck und der OH-Endgruppenkonzentration abhängig. Diese Bedingungen sind also im vorletzten Reaktor so zu wählen, um das angestrebte Endprodukt herstellen zu können.

Das mittlere Gewichtsmolekulargewicht Mw wird so eingestellt, dass max. Mw = 28.000, bevorzugt max. Mw = 26.000 und besonders bevorzugt max. Mw = 24.000 erreicht wird .

Der Gehalt an OH-Endgruppen in den Polycarbonaten liegt zwischen 50 und 750 ppm, vorzugsweise zwischen 70 und 500 ppm, besonders bevorzugt zwischen 90 und 400 ppm und ganz besonders bevorzugt zwischen 100 und 300 ppm.

Nach dem vorletzten Reaktor ist die Schmelze mit einem geeigneten Inhibitor intensiv zu vermischen, um die Reaktion zu stoppen. Danach können im Finishreaktor die Monomeren entfernt werden.

Bei den üblichen Vorrichtungen zur Entfernung der Restmonomeren sind die Verweilzeiten gering. Da die Kinetik aber langsam und die Reaktion somit nicht abgeschlossen sein kann, kann das Polymer nach der Restmonomerentfernung bei nicht auf den Punkt eingestellter Inhibierung bei der Weiterverarbeitung leicht Monomere rückbilden. Dieser Nachteil kann sich beim erfindungsgemäßen Verfahren nicht einstellen.

Als Inhibitoren geeignet sind Säurekomponenten wie Lewis- oder Brönstedsäuren oder Ester starker Säuren mit einem pKa-Wert kleiner als 5, bevorzugt kleiner 3. Die Säurekomponente wird bzw. deren Ester werden zugegeben, um die Reaktionsmischung zu deaktivieren, also die Reaktion im Idealfall vollständig zum Erliegen zu bringen. Die Säurekomponente wird in Konzentrationen von < 20 ppm, vorzugsweise < 10 ppm, besonders bevorzugt < 5 ppm und ganz besonders bevorzugt ≤ 2,5 ppm zugesetzt. Überraschenderweise genügen diese Mengen, obwohl der Fachmann damit rechnet, dass die erforderlichen Mengen zumindest den eingesetzten, also den zu neutralisierenden Mengen an Katalysator äquivalent sein sollten. Der Stand der Technik, s.o., fordert ja sogar einen mehrfachen Überschuss des Inhibitors bezogen auf die eingesetzte Katalysatormenge. In einer vorzugsweisen Ausführung des erfindungsgemäßen Verfahren werden 0,00004 mol Phosphoniumkatalysator pro mol eingesetzter Dihydroxyarylverbindung, bevorzugt Tetraphenylphosphoniumphenolat, vor der Reaktion zugesetzt. Nach Erreichen des gewünschten Molekulargewichts liegt die nachweisbare P-Menge im 1 ppm Bereich. Die erfindungsgemäß einzusetzenden molaren Inhibitor-Mengen liegen allerdings unter den aus dem P-Wert anzunehmenden molaren Restmengen an Katalysator.

Bevorzugt, besonders bevorzugt oder ganz besonders bevorzugt sind Ausführungsformen, welche von den unter bevorzugt, besonders bevorzugt oder ganz besonders bevorzugt genannten Parametern, Verbindungen, Definitionen und Erläuterungen Gebrauch machen.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Beispiele für geeignete Säurekomponenten sind: ortho-Phosphorsäure, phosphorige Säure, Pyrophosphorsäure, Hypophosphorsäure, Polyphosphorsäuren, Benzolphosphonsäure, Natriumdihydrogenphosphat, Borsäure, Arylboronsäuren, Salzsäure (Chlorwasserstoff), Schwefelsäure, Ascorbinsäure, Oxalsäure, Benzoesäure, Salicylsäure, Ameisensäure, Essigsäure, Adipinsäure, Zitronensäure, Benzolsulfonsäure, Toluolsulfonsäure, Dodekylbenzolsulfonsäure und alle sonstigen Phenyl-substituierten Benzolsulfonsäuren, Salpetersäure, Terephthalsäure, Isophthalsäure, Stearinsäure und sonstige Fettsäuren, Säurechloride wie Chlorameisensäurephenylester, Stearinsäurechlorid, Acetoxy-BP-A, Benzoylchlorid sowie Ester, Halbester und verbrückte Ester der oben genannten Säuren wie beispielsweise Toluolsulfonsäureester, Phosphorsäureester, Phosphorigsäureester, Phosphonsäureester, Dimethylsulfat, Borsäureester, Arylboronsäureester und andere unter Wassereinfluss säuregenerierende Komponenten wie Tri-iso-octylphosphin, Ultranox 640 und BDP (Bisphenoldiphosphat-Oligomer).

Bevorzugt kommen dabei ortho-Phosphorsäure, phosphorige Säure, Pyrophosphorsäure, Hypophosphorsäure, Polyphosphorsäuren, Benzolphosphonsäure, Natriumdihydrogenphosphat, Borsäure, Arylboronsäuren, Benzoesäure, Salicylsäure, Benzolsulfonsäure, Toluolsulfonsäure, Dodekylbenzolsulfonsäure und alle sonstigen Phenyl-substituierten Benzolsulfonsäuren, Säurechloride wie Chlorameisensäurephenylester, Stearinsäurechlorid, Acetoxy-BP-A, Benzoylchlorid sowie Ester, Halbester und verbrückte Ester der oben genannten Säuren wie beispielsweise Toluolsulfonsäureester, Phosphorsäureester, Phosphorigsäureester, Phosphonsäureester, Borsäureester, Arylboronsäureester und andere unter Wassereinfluss säuregenerierende Komponenten wie Tri-iso-octylphosphin, Ultranox 640 und BDP in Frage.

Besonders bevorzugt kommen ortho-Phosphorsäure, Pyrophosphorsäure, Polyphosphorsäuren, Benzolphosphonsäure, Benzoesäure, Benzolsulfonsäure, Toluolsulfonsäure, Dodekylbenzolsulfonsäure und alle sonstigen Phenyl-substituierten Benzolsulfonsäuren sowie Ester, Halbester und verbrückte Ester der oben genannten Säuren wie beispielsweise Toluolsulfonsäureester, Phosphorsäureester, Phosphorigsäureester, Phosphonsäureester und andere unter Wassereinfluss säuregenerierende Komponenten wie Tri-iso-octylphosphin, Ultranox 640 und BDP in Frage.

Ganz besonders bevorzugt kommen ortho-Phosphorsäure, Pyrophosphorsäure, Benzolsulfonsäure, Toluolsulfonsäure, Dodekylbenzolsulfonsäure und alle sonstigen Phenyl-substituierten Benzolsulfonsäuren sowie Ester, Halbester und verbrückte Ester der oben genannten Säuren wie beispielsweise Toluolsulfonsäureester und Phosphorsäureester in Frage.

Die Zudosierung der sauren Komponenten kann in fester, flüssiger oder gasförmiger Form erfolgen. In einer bevorzugten Verfahrensweise wird die saure Komponente kontinuierlich in den von den Monomeren zu befreienden Produktstrom im Herstellprozess direkt nach Erreichen des angestrebten Endmolekulargewichtes homogen zugemischt, um sofort danach mit der Verdampfung der Restmonomeren zu beginnen. In einer besonders bevorzugten Verfahrensweise wird die Additivierung zur Verbesserung einzelner Produkteigenschaften hinter der Säuredosierung und der Restmonomerreduzierung vorgenommen und nicht mit dem Schritt der Restmonomerreduzierung zusammengefasst, weil oft Additive benutzt werden, die im Vakuum, das für die Reduzierung der Restmonomeren unabdingbar ist, flüchtig sind und dann schlecht in den nötigen Konzentrationen im Polymer einzustellen sind.

Bevorzugt werden die sauren Komponenten in flüssiger Form zugegeben. Da die zu dosierenden Mengen sehr gering sind, werden vorzugsweise Lösungen der sauren Komponenten verwendet.

Geeignete Lösemittel sind solche, die den Prozess nicht stören, chemisch inert sind und schnell verdampfen.

Als Lösemittel kommen alle organischen Lösemittel mit einem Siedepunkt bei Normaldruck von 30 bis 300°C, bevorzugt von 30 bis 250°C und besonders bevorzugt von 30 bis 200°C sowie auch Wasser - dazu zählt auch Kristallwasser - in Frage. Vorzugsweise werden solche Verbindungen gewählt, die in den jeweiligen Prozessen vorkommen. Eventuell verbleibende Reste mindern, je nach Anforderungsprofil des herzustellenden Produktes, nicht die Qualität.

Lösemittel sind neben Wasser Alkane, Cycloalkane und Aromaten, die auch substituiert sein können. Die Substituenten können aliphatische, cycloaliphatische oder aromatische Reste in unterschiedlicher Kombination sowie Halogene oder eine Hydroxylpruppe sein. Heteroatome, wie beispielsweise Sauerstoff, können auch zwischen aliphatischen, cycloaliphatischen oder aromatischen Resten Brückenglieder sein, wobei die Reste gleich oder unterschiedlich sein können. Weitere Lösemittel können auch Ketone und Ester organischer Säuren sowie cyclische Carbonate sein.

Beispiele sind neben Wasser n-Pentan, n- Hexan, n-Heptan und deren Isomere, Cyclohexan, Toluol und Xylol, Methylenchlorid, Ethylchlorid, Etylenchlorid, Chlorbenzol, Methanol, Ethanol, Propanol, Butanol und deren Isomere, Phenol, o-, m- und p-Kresol, Diethylether, Dimethylketon, Polyethylenglycole, Polypropylenglycole, Essigsäureethylester, Ethylencarbonat und Propylencarbonat.

Bevorzugt geeignet sind für den Polycarbonatprozess Wasser, Phenol, Propylencarbonat, Ethylencarbonat und Toluol.

Besonders bevorzugt geeignet sind Wasser, Phenol und Propylencarbonat.

Zur wirksamen Einmischung des Inhibitors sind statische Mischer oder andere zu einer homogenen Einmischung führende Mischer, wie beispielsweise Extruder, geeignet.

Eine bevorzugte Verfahrensweise sei beispielhaft aber nicht einschränkend beschrieben: Aus dem Schmelzestrom zwischen dem vorletzten Reaktor und dem Finishreaktor wird mittels einer Zahnradpumpe ein Teilstrom entnommen, in den der Inhibitor zudosiert wird. Das Gemisch wird direkt danach zur intensiven Vermischung über einen statischen Mischer in den Hauptstrom zurückgepumpt. Hinter der Eintrittsstelle folgt in Flussrichtung ein weiterer statischer Mischer, der die homogene Verteilung im Schmelzehauptstrom besorgt, der dann in den Endreaktor geleitet wird.

Im Endreaktor, der zur Restmonomerreduzierung eingesetzt wird, werden dann bei Temperaturen von 260 bis 310°C, vorzugsweise bei 265 bis 300°C und besonders bevorzugt bei 270 bis 290°C und bei Drucken von 0,01 bis 3 mbar, bevorzugt von 0,2 bis 2,5 mbar und besonders bevorzugt von 0,4 bis 2 mbar die Restmonomeren reduziert. Die Füllstände werden in den Endreaktor so niedrig wie verfahrenstechnisch möglich eingestellt.

Die Verweilzeit im End- oder Finishreaktor liegt in der Größenordnung von einigen Minuten bis Stunden, bevorzugt sind zwischen 15-180 min, besonders bevorzugt 15-150 min und ganz besonders bevorzugt 15-120 min.

Einen möglicherweise gegebenen geringfügigen Molekulargewichtsaufbau im Finishreaktor, in dem die Ausdampfung der Restmonomeren erfolgt, kann man dadurch ausgleichen, dass man das Eintrittsmolekulargewicht soweit absenkt, dass nach der Ausdampfung der Restmonomeren das Endmolekulargewicht genau erreicht wird.

Das fertige Polycarbonat wird mittels einer Pumpvorrichtung aus dem letzten Reaktor ausgetragen, bei Bedarf nach bekannten Verfahren mit Zuschlagstoffen zur Eigenschaftsverbesserung ausgestattet, als Borsten ausgezogen, abgekühlt und granuliert.

Als Pumpvorrichtung wird in der Regel eine Zahnradpumpe verwendet. Alternativ können auch Schnecken unterschiedlichster Bauart oder Verdrängerpumpen spezieller Bauart benutzt werden.

Das so erhaltene Polycarbonat enthält idealerweise weniger als 350 ppm Diphenylcarbonat (DPC), 40 ppm 2,2-Bis-(4-hydroxyphenyl)-propan (BPA) und 150 ppm Phenol, bevorzugt weniger als 300 ppm DPC, 30 ppm BPA, und 100 ppm Phenol, besonders bevorzugt weniger als 250 ppm DPC, 20 ppm BPA, und 80 ppm Phenol, sowie insbesondere besonders bevorzugt weniger als 200 ppm DPC, 15 ppm BPA und 70 ppm Phenol.

Die erhaltenen Polycarbonate können zur Veränderung von Eigenschaften mit den üblichen Additiven und Zusatzstoffen (z.B. Hilfs- und Verstärkungsstoffe) versehen werden. Der Zusatz von Additiven und Zuschlagsstoffen dient der Verlängerung der Nutzungsdauer (z.B. Hydrolyse-oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern). Alles kann beliebig kombiniert werden, um die gewünschten Eigenschaften einzustellen und zu erreichen. Solche Zuschlagstoffe und Additive werden z.B. in "Plastics Additives", R. Gächter und H. Müller, Hanser Publishers 1983, in Additives for Plastics Handbook, John Murphy, Elsevier, Oxford 1999 oder in Plastics Additives Handbook Hans Zweifel, Hanser, München 2001 beschrieben.

Diese Additive und Zuschlagstoffe können einzeln oder in beliebigen Mischungen oder mehreren verschiedenen Mischungen der Polymerschmelze zugesetzt werden und zwar direkt bei der Isolierung des Polymeren oder aber nach Aufschmelzen von Granulat in einem sogenannten Compoundierungsschritt.

Dabei können die Additive und Zuschlagstoffe beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Der Zusatz dieser Stoffe erfolgt vorzugsweise mit bekannten Dosieraggregaten zum fertigen Polycarbonat, kann jedoch, je nach Erfordernissen, auch auf einer anderen Stufe im Herstellverfahren des Polycarbonats erfolgen. Das Vermischen mit dem Polymeren erfolgt in hierfür bekannten Vorrichtungen wie z.B. Schnecken oder Statischen Mischern.

Die nach dem in der Erfindung beschriebenen Verfahren erhältlichen Polycarbonate können auf bekannten Maschinen, beispielsweise auf Extrudern oder Spritzgussmaschinen, zu unterschiedlichen Formkörpern verarbeitet werden.

Mögliche Anwendungen der nach der beschriebenen Erfindung erhaltenen Polycarbonate sind, je nach Molekulargewicht und Ausstattung mit Zusatzstoffen beliebiger Art, beispielsweise:
- Extrusions- und Lösungsfolien für Displays, Elektromotoren, Skifolien, Verpackungsfolien für Arzneimittel u. a..
- Blaskörper, z.B. 1 bis 5 Gallon Wasserflaschen (siehe z.B. US 2 964 794).
- Optische Datenspeicher, z.B. CD und DVD, sowie andere Datenspeicher.
- Chip-Boxen und Chip-Träger.
- Oxygenatoren, Dialysatoren u. a. in der Medizin.
- Schutzbrillen, optische Korrekturbrillen, Linsen für Foto- und Filmkameras (siehe z.B. DE-A 2 701 173) u. a..
- Präzisionsspritzgussteile, wie z.B. Linsenhalterungen, meist zweckmäßigerweise mit Glasfasern verstärktes Polycarbonat, das ggf. zusätzlich 1 - 10 Gew.-% MoS₂ enthält.
- Lichtübertragungsträger wie Lichtleiterkabel (siehe z.B. EP-A1 0 089 801).
- Trägermaterial für organische Fotoleiter.
- Mobiltelefongehäuse mit verbesserter Beständigkeit gegenüber Parfüm, Rasierwasser und Hautschweiß.
- Network interface devices.
- Elektroisolierstoff für elektrische Leiter, Steckergehäuse und Steckverbinder.
- Gehäuse für z.B. Elektroverteilerschränke, Elektrogeräte, Haushaltsgeräte.
- Bauteile für Haushaltsartikel, Elektro- und Elektronikgeräte.
- Flaschen, Geschirr, Schokoladenformen u. a. für Lebensmittelanwendungen.
- Küchenspülen und Briefkastengehäuse.
- Transparente Waschmaschinen, Bullaugen mit verbesserter Beständigkeit gegenüber der Waschlösung.
- Lampenabdeckungen für Kücheneinrichtungen mit verbesserter Beständigkeit gegenüber Küchendunst, insbesondere Öldämpfen.
- Sicherheitsscheiben für Gebäude, Fahrzeuge, Flugzeuge und Schilde für Helme.
- Lichtdurchlässige Platten, insbesondere Hohlkammerplatten, beispielsweise zum Abdecken von Gebäuden wie Bahnhöfe, Hallen und Gewächshäuser.
- Transluzente Kunststoffe mit einem Gehalt an Glasfasern für lichttechnische Zwecke (siehe z.B. DE-A 1 554 020).
- Transluzente Kunststoffe mit einem Gehalt an Bariumsulfat, Titandioxid und oder Zirkoniumoxid oder auch organischen polymeren Acrylatkautschuken (siehe z.B. EP-A 634 445 und EP-A 269324) zur Herstellung von lichtdurchlässigen und lichtstreunenden Formteilen.
- Schaumstoffe (siehe z.B. DE-A 1 031 507).
- Fäden und Drähte (siehe z.B. DE-A 1 137 167 und DE-A 1 785 137).
- Stallmasttüren und Tierkäfige.
- Sportartikel, wie z.B. Slalomstangen, Skischuhschnallen u. a..
- Leuchten, wie z.B. Scheinwerferlampen, "head-lamps", Streulichtscheiben, innere Linsen und Lampenabdeckungen.
- Stoßfänger ggf. in Form geeigneter Blends mit ABS oder geeigneten Kautschuken, wo Kontakt zu Kraftstoffen und Schmiermitteln auftreten kann.
- Motorrad- und Schutzhelme.
- Teile für Automobile, wie z.B.Verscheibungen, Armaturenbretter, Karosserieteile und Stoßdämpfer.
- Ampelgehäuse und Verkehrsschilder.

Die Produkte aus dem erfindungsgemäßen Polycarbonat sind ebenfalls Bestandteil der vorliegenden Erfindung.

Bestimmung der genannten analytischen Kennzahlen:

### Rel. Viskosität:

Die relative Viskosität wird als Quotient aus der Viskosität des Lösungsmittels und der Viskosität des in diesem Lösungsmittel gelösten Polymers bestimmt. Sie wird in Dichlormethan bei einer Konzentration von 5 g/l Lösung bei 25°C ermittelt.

### Molmasse als Gewichtsmittelwert:

Der Gewichtsmittelwert der Molmasse Mw wird aus Streulichtmessungen bestimmt.

Alternativ kann der Gewichtsmittelwert der Molmasse Mw über die Messung der Grenzviskosität nach bekannten Mark-Houwing Korrelationen ( J.Brandrup,E.H. Immergut - Polymer Handbook ) berechnet werden. In eingegrenzten Molmassenbereichen kann in guter Näherung das Mw aus der relativen Viskosität über bekannte Korrelationen berechnet werden.

Ebenfalls möglich ist eine Berechnung des Gewichtsmittelwertes der Molmasse Mw aus gelchromatographischen Messungen ( GPC ). Hierzu ist die Kalibrierung des Messsystems mit geeigneten Polycarbonatstandards erforderlich oder kann durch die direkte Molmassenbestimmung in der GPC mittels einer zusätzlichen Streulichtdetektion ermittelt werden.

### OH-Endgruppe:

Der Gehalt an phenolischem OH wird durch IR-Messung erhalten. Zu diesem Zweck wird eine Differenzmessung von einer Lösung aus 2 g Polymer in 50 ml Dichlormethan gegenüber reinem Dichlormethan vermessen und die Extinktionsdifferenz bei 3582 cm⁻¹ bestimmt.

### Restmonomere:

Zur Bestimmung der Restmonomere wird die Probe in Dichlormethan gelöst und dann mit Aceton/Methanol ausgefällt. Nach Abtrennen des ausgefällten Polymers wird das Filtrat eingeengt. Die Quantifizierung der Restmonomere erfolgt durch Reverse-Phase-Chromatographie im Fließmittelgradienten 0,04 % Phosphorsäure - Acetonitril. Die Detektion erfolgt über UV.

Die nachfolgenden Beispiele sollen die Erfindung illustrieren, ohne sie jedoch zu beschränken:

### Vergleichsbeispiel 1:

In einem 500 ml Dreihalskolben mit Rührer, Innenthermometer und Vigreuxkolonne (30 cm, verspiegelt) mit Brücke werden 45,66 g (0,2 mol) Bisphenol A, 46,27 g (0,216 mol) Diphenylcarbonat und 0,0053 g (4 x 10⁻³ mol %) Phenoladdukt von Tetraphenylphosphoniumphenolat (TPP-P), das 35 % Phenol enthält, bezogen auf Bisphenol A, eingewogen. Die Apparatur wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 30 Minuten abdestilliert. Nun wird die Temperatur auf 235°C erhöht und 10 Minuten das entstehende Phenol abdestilliert. Dann wird innerhalb von 10 Minuten das Vakuum auf 60 mbar und gleichzeitig die Temperatur auf 300°C eingestellt. Nach wiederum 10 Minuten wird das Vakuum auf 0,5 mbar reduziert und weitere 30 Minuten gerührt. Nun wird eine Probe 1 bei Normaldruck im Stickstoffgegenstrom gezogen, von der die relative Viskosität, der Gehalt an phenolischen OH-Endgruppen sowie die Restmonomere bestimmt werden.

Danach wird der Reaktionssatz ohne weiteren Zusatz zwei weitere Stunden bei 300°C und 0,5 mbar gerührt, um die Restmonomere auszudampfen (Probe 2). Die Ergebnisse sind in der Tabelle 1 angegeben.

### Beispiel 1:

Wie Vergleichsbeispiel 1, jedoch wird nach Entnahme der Probe 1 unter Zusatz von 2.5 ppm 10%iger wässriger Phosphorsäure zwei weitere Stunden bei 300°C und 0,5 mbar gerührt, um die Restmonomere auszudampfen. Die Ergebnisse sind in der Tabelle 1 angegeben.

### Vergleichsbeispiel 2:

In einem 500 ml Dreihalskolben mit Rührer, Innenthermometer und Vigreuxkolonne (30 cm, verspiegelt) mit Brücke werden 136,98 g (0,6 mol) Bisphenol A, 134,96 g (0,63 mol) Diphenylcarbonat und 0,0159 g (4 x 10⁻³ mol %) Phenoladdukt von Tetraphenylphosphoniumphenolat, das 35 % Phenol enthält, bezogen auf Bisphenol A, eingewogen. Die Apparatur wird durch Anlegen von Vakuum und Spülen mit Stickstoff (dreimal) vom Luftsauerstoff befreit und das Gemisch bei 190°C aufgeschmolzen und entstehendes Phenol abdestilliert. Nun wird ein Vakuum von 100 mbar angelegt und weitere 20 Minuten destilliert. Dann wird die Temperatur auf 235°C erhöht und 15 Minuten das entstehende Phenol abdestilliert. Daraufhin wird innerhalb von 5 Minuten das Vakuum auf 60 mbar eingestellt und 15 Minuten gehalten. Man erhitzt auf 250°C und hält das Plateau 15 Minuten. Dann reduziert man den Druck auf 5 mbar für 15 Minuten, woraufhin man auf 280°C erhitzt. Nach wiederum 15 Minuten wird das Vakuum auf 0,5 mbar reduziert und weitere 15 Minuten gerührt. Darauf erhitzt man auf 300°C und hält 30 min. Nun wird eine Probe 1 bei Normaldruck unter Stickstoffatmosphäre gezogen, von der die relative Viskosität, der Gehalt an phenolischen OH-Endgruppen sowie die Restmonomere bestimmt werden.

Danach wird der Reaktionssatz ohne weiteren Zusatz zwei weitere Stunden bei 300°C und 0,5 mbar gerührt, um die Restmonomere auszudampfen (Probe 2). Die Ergebnisse sind in der Tabelle 1 angegeben.

### Beispiel 2:

Wie Vergleichsbeispiel 2, jedoch wird nach Entnahme der Probe 1 unter Zusatz von 2.5 ppm 10%iger wässriger Phosphorsäure zwei weitere Stunden bei 300°C und 0,5 mbar gerührt, um die Restmonomere auszudampfen. Die Ergebnisse sind in der Tabelle 1 angegeben.

### Beispiel 3:

Aus einer Vorlage werden 8.600 kg/h Schmelzegemisch, bestehend aus 4.425 kg Diphenylcarbonat/h (20.658 mol/h) und 4.175 kg Bisphenol A/h (18.287 mol/h), unter Zusetzen von 0,52 kg des Phenoladdukts von Tetraphenylphosphoniumphenolat mit 65,5 % Tetraphenylphosphoniumphenolat/h (0,786 mol/h; das sind 0,0043 Mol %) gelöst in 4,5 kg Phenol/h durch einen Wärmetauscher gepumpt, auf 190°C erwärmt und durch eine Verweilkolonne bei 12 bar und 190°C geführt. Die mittlere Verweilzeit beträgt 50 Minuten.

Die Schmelze wird dann über ein Entspannungsventil in einen unter 200 mbar stehenden Abscheider geleitet. Die abfließende Schmelze wird in einem, ebenfalls unter 200 mbar stehenden, Fallfilmverdampfer wieder auf 189°C erwärmt und in einer Vorlage aufgefangen. Nach einer Verweilzeit von 20 Minuten wird die Schmelze in die nächsten drei, gleichartig aufgebauten Stufen gepumpt. Die Bedingungen in der 2. / 3. / 4. Stufe sind 100 / 74 / 40 mbar; 218 / 251 / 276°C und 20 / 10 / 10 Minuten. Das entstandene Oligomere hat eine rel. Viskosität von 1,09. Alle Brüden werden über Druckregelungen in eine unter Vakuum stehende Kolonne geführt und als Kondensate abgeleitet.

Danach wird das Oligomer in einem sich anschliessenden Korbreaktor bei 278°C und 3,0 mbar bei einer Verweilzeit von 45 Minuten zu einem höhermolekularen Produkt aufkondensiert. Die rel. Viskosität beträgt 1,195. Die Brüden werden kondensiert.

Vom Schmelzestrom, der in einen weiteren Korbreaktor geleitet wird, wird mittels einer Zahnradpumpe ein Teilstrom von 150 kg Schmelze/h abgezweigt, mit 185 g einer 5 %igen wässrigen Phosphorsäure/h versetzt, über einen statischen Mischer mit einem Länge-zu-DurchmesserVerhältnis von 20 geführt und wieder in den Hautschmelzestrom zurückgeleitet. Direkt nach dem Zusammentreffen wird die Phosphorsäure im gesamten Schmelzestrom mittels eines weiteren statischen Mischers homogen verteilt.

Die so behandelte Schmelze wird in einem weiteren Korbreaktor bei 284°C, 0,7 mbar und bei einer mittleren Verweilzeit von 130 Minuten weiter den Prozessbedingungen ausgesetzt, ausgetragen und granuliert.

Die Brüden werden in der Vakuumanlage und dahinter kondensiert.

Das erhaltene Polycarbonat hat die in der Tabelle 1 dargestellten Kennzahlen.

**Tabelle 1:**

| | | **Relative Viskosität** | **Phenolisch -OH [ppm]** | **DPC [ppm]** | **BPA [ppm]** | **Phenol [ppm]** |
|---|---|---|---|---|---|---|
| Vergleichsbeispiel 1 | Probe 1 | 1,26 | 640 | 190 | 25 | 70 |
| | Probe 2 | 1,31 | 380 | 68 | 17 | 45 |
| Vergleichsbeispiel 2 | Probe 1 | 1,21 | 420 | 245 | 15 | 84 |
| | Probe 2 | 1,25 | 310 | 192 | 5 | 36 |
| Beispiel 1 | Probe 1 | 1,26 | 380 | 183 | 20 | 52 |
| | Probe 2 | 1,27 | 330 | 31 | 18 | 48 |
| Beispiel 2 | Probe 1 | 1,20 | 390 | 234 | 17 | 72 |
| | Probe 2 | 1,20 | 350 | 64 | 7 | 39 |
| Beispiel 3 | | 1,201 | 255 | 71 | 6 | 56 |

Wie den Beispielen zu entnehmen ist, führt das erfindungsgemäße Verfahren überraschenderweise nicht zu einem weiteren Molgewichtsaufbau bei niedrigem Monomergehalt des Endproduktes.

## Patentansprüche

1. Verfahren zur Herstellung monomerarmer Polycarbonate, die nach dem Verfahren der Schmelzeumesterung aus Dihydroxyarylverbindungen und Diarylcarbonaten durch reine Oniumkatalyse erhalten werden, **dadurch gekennzeichnet, dass** in bestehenden mehrstufigen Produktionsanlagen das zu erreichende Molekulargewicht vor Eintritt in die letzte Reaktionsstufe eingestellt wird, die Polykondensation durch Zugabe von unterstöchiometrischen Mengen an Inhibitoren, gemessen an den eingesetzten Katalysatormengen, gestoppt wird und in der letzten Reaktionsstufe die Monomeren reduziert werden, wobei der Inhibitor eine sauer wirkende Substanz ist, deren Säurekomponente einen pKa von < 5 aufweist.

2. Verfahren nach Anspruch 1, **dadurch gekennzeichnet, dass** Molekulargewichte von max. Mw 30.000 als Endwert erreicht werden werden.

3. Verfahren nach Anspruch 1 oder 2, **dadurch gekennzeichnet, dass** der OH-Endgruppengehalt vor dem letzten Reaktor auf 70 - 500 ppm eingestellt wird.

4. Verfahren nach wenigstens einem der Ansprüche 1, 2 und 4, **dadurch gekennzeichnet, dass** die sauer wirkende Substanz ortho-Phosphorsäure, Pyrophosphorsäure, Benzolsulfonsäure, Toluolsulfonsäure, Dodecylbenzolsulfonsäure, eine Phenyl-substituierte Benzolsulfonsäure oder ein Ester, Halbester oder verbrückter Ester der vorangehend genannten Säuren ist.

5. Verfahren nach wenigstens einem der Ansprüche 1, 2 und 4, **dadurch gekennzeichnet, dass** die sauer wirkende Substanz aus der Gruppe der ortho-Phosphorsäure und der sauren Ester dieser Säure ausgewählt ist.

6. Verfahren nach wenigstens einem der Ansprüche 1, 2 und 4 und 5, **dadurch gekennzeichnet, dass** die Menge der sauren Substanz < 8 ppm beträgt.

7. Verfahren nach wenigstens einem der Ansprüche 1 bis 6, **dadurch gekennzeichnet, dass** die Temperatur im Verfahrensschritt, in welchem die Monomeren aus dem Polykondensat entfernt werden, 310°C nicht überschreitet.

8. Verfahren nach wenigstens einem der Ansprüche 1 bis 7, **dadurch gekennzeichnet, dass** die Verweilzeiten im Finishreaktor 15 bis 150 min betragen.

## Claims

1. Process for the production of polycarbonates having a low monomer content, which are obtained by the process of melt transesterification from dihydroxyaryl compounds and diaryl carbonates by pure onium catalysis, **characterised in that** in existing multistage production lines the target molecular weight is established before entry into the final reaction stage, polycondensation is stopped by addition of hypostoichiometric amounts of inhibitors, measured against the amounts of catalyst used, and in the final reaction stage the monomers are reduced, the inhibitor being an acid substance whose acid component has a pKa of < 5.

2. Process according to claim 1, **characterised in that** molecular weights of max. Mw 30,000 are obtained as the final value.

3. Process according to claim 1 or 2, **characterised in that** the OH end group content is adjusted to 70 to 500 ppm before the final reactor.

4. Process according to at least one of claims 1, 2 and 4, **characterised in that** the acid substance is ortho-phosphoric acid, pyrophosphoric acid, benzenesulfonic acid, toluenesulfonic acid, dodecylbenzenesulfonic acid, a phenyl-substituted benzenesulfonic acid or an ester, semi-ester or bridged ester of the aforementioned acids.

5. Process according to at least one of claims 1, 2 and 4, **characterised in that** the acid substance is selected from the group of ortho-phosphoric acid and acid esters of this acid.

6. Process according to at least one of claims 1, 2 and 4 and 5, **characterised in that** the amount of the acid substance is < 8 ppm.

7. Process according to at least one of claims 1 to 6, **characterised in that** the temperature in the process stage in which the monomers are removed from the polycondensate does not exceed 310°C.

8. Process according to at least one of claims 1 to 7, **characterised in that** the residence times in the finishing reactor are 15 to 150 min.

## Revendications

1. Procédé de préparation de polycarbonates pauvres en monomères, qui sont obtenus par le procédé de transestérification à l'état fondu à partir de composés dihydroxyaryle et de carbonates de diaryle par une catalyse onium pure, **caractérisé en ce que** dans les installations de production à plusieurs étapes existantes, le poids moléculaire à atteindre est ajusté avant l'entrée dans la dernière étape de réaction, la polycondensation est arrêtée par addition de quantités sous-stoechiométriques d'inhibiteur, mesurées sur la quantité de catalyseur mise en oeuvre et dans la dernière étape de réaction, les monomères sont réduits, l'inhibiteur étant une substance agissant de manière acide, dont le composant acide présente un pKa < 5.

2. Procédé selon la revendication 1, **caractérisé en ce que** des poids moléculaires de Mw maximal de 30 000 comme valeur finale sont atteints.

3. Procédé selon la revendication 1 ou 2, **caractérisé en ce que** la teneur en radicaux OH terminaux est ajustée avant le dernier réacteur, dans l'intervalle allant de 70 à 500 ppm.

4. Procédé selon au moins l'une des revendications 1 à 3, **caractérisé en ce que** la substance agissant de manière acide est l'acide ortho-phosphorique, l'acide pyrophosphorique, l'acide benzènesulfonique, l'acide toluènesulfonique, l'acide dodécylbenzènesulfonique, un acide benzènesulfonique phényl-substitué, ou un ester, hémi-ester ou ester ponté des acides cité ci-dessus.

5. Procédé selon au moins l'une des revendications 1, 2 et 4, **caractérisé en ce que** la substance agissant de manière acide est choisie parmi le groupe de l'acide ortho-phosphorique est des esters acides de cet acide.

6. Procédé selon au moins l'une des revendications 1, 2, 4 et 5, **caractérisé en ce que** la quantité de substance acide se situe à < 8 ppm.

7. Procédé selon au moins l'une des revendications 1 à 6, **caractérisé en ce que** la température dans l'étape de procédé, au cours de la quelle les monomères sont éliminés du polycondensat, se dépasse pas 310°C.

8. Procédé selon au moins l'une des revendications 1 à 7, **caractérisé en ce que** les temps de séjour dans le réacteur de finition se situent dans l'intervalle allant de 15 à 150 minutes.
